# EUROPÄISCHE PATENTANMELDUNG

(11) **EP 3 054 223 A1**
(43) Veröffentlichungstag der Anmeldung: **10.08.2016**
(21) Anmeldenummer: 16000283.8
(22) Anmeldetag: 04.02.2016
(51) Int. Cl.: F24D 3/14

(54) **VERBUNDMATTE**

(30) Priorität: 09.02.2015 AT 422015
(71) Anmelder: Steinbacher Dämmstoff Gesellschaft m.b.H., 6383 Erpfendorf (AT)
(72) Erfinder: Hebbel, Roland, 6383 Erpfendorf (AT)
(74) Vertreter: Torggler & Hofinger Patentanwälte

(57) **Zusammenfassung**

Eine Verbundmatte zum Verhaken von Rohrbefestigungsorganen für eine Flächenheizung weist eine Platte (1) aus einem geschäumten Polyethylen, ein an einer Seite der Platte (1) befestigtes Netz (2) und eine auf dem Netz (2) angeordnete Deckfolie (3) aus einem Polyethylen auf.

## Beschreibung

Die Erfindung betrifft eine Verbundmatte zum Verhaken von Rohrbefestigungsorganen für eine Flächenheizung mit einer Platte aus einem geschäumten Kunststoff und mit einem an einer Seite der Platte angeordneten Netz.

Eine derartige Verbundmatte ist beispielsweise aus der DE 2849805 bekannt und dient einerseits zur Verbesserung der Trittschalleigenschaften des Fußbodenaufbaus und andererseits als Montagehilfe bei der Verlegung von Rohren für eine Fußbodenheizung, wobei Halteelemente, die in die Platte eingebracht werden, durch das Netz am Lockern oder Herausziehen gehindert werden.

Weiters beschreibt die WO 2007/125296 ein Befestigungssystem für Rohre einer Fußbodenheizung mittels Klettverbindungen. Dabei sind die Rohre an der Außenseite mit Häkchen oder Schlaufen versehen, die mit Schlaufen oder Häkchen an der Oberfläche der Platte zusammenwirken. Diese Elemente sind auf beide Flächen insbesondere aufgeflockt.

Die Erfindung hat es sich nun zur Aufgabe gestellt derartige Verbundmatten nochmals zu verbessern und vorzugsweise auch deren Verlegung zu erleichtern. Dies wird erfindungsgemäß dadurch erreicht, dass auf dem Netz eine Deckfolie angeordnet ist. Die Art des Netzes ist dabei nebensächlich, da es ja nur dem Rückhalt der Halteelemente dient. Das Netz kann also gewoben, gewirkt, knotenlos, als Gelege ausgebildet, gegebenenfalls auch ein Gitter sein.

Die Deckfolie schützt nicht nur das darunterliegende Netz vor Beschädigungen während der Verlegung und Verarbeitung bis zur Einbringung und Erhärtung des Estrichs, sondern kann in einer bevorzugten Ausführung auch selbst zur Festlegung der Heizungsrohre beitragen, wenn sie durch eine Klettfolie gebildet ist.

Sowohl die Platte als auch die Deckfolie bestehen vorzugsweise aus einem Polyethylen, da sich Polyethylenteile in einfacher Weise durch Wärmeeinwirkung verschweißen lassen. Auf diese Weise kann auch das Netz zwischen der Platte und der Deckfolie in einfacher Weise fixiert werden. Die Deckfolie kann aber auch mit der Platte verklebt sein, wofür sie in einer bevorzugten Ausführung mit einer Schmelzkleberschicht versehen ist, die sich ebenfalls durch Wärmeinwirkung mit der Platte verbindet. Eine Schmelzverklebung erfolgt bei niedereren Temperaturen als eine Verschweißung und hat daher den Vorteil eines geringeren Energieaufwandes, jedoch mitunter den Nachteil, dass starke Sonneneinstrahlung im Bereich von Fenster- oder Türöffnungen den Schmelzkleber erweicht, solange die Rohrleitungen nicht vom Estrich überdeckt sind. Dieser Nachteil lässt sich erfindungsgemäß durch die oben erwähnten Verankerungselemente beheben, die durch das unter der Deckfolie vorgesehene Netz in der Platte verankert werden, da sie die Rohre auch bei erweichtem Schmelzkleber nieder halten.

In einer bevorzugten Ausführung ist weiters vorgesehen, dass die Platte an der von der Deckfolie abgewandten Seite eine vollflächige Klebeschicht zur Verbindung mit einem Untergrund aufweist, wobei die Klebeschicht insbesondere mit einer entfernbaren Schutzfolie überzogen ist.

Eine gute Trittschalldämmung lässt sich erzielen, wenn die insbesondere aus einem Polyethylen geschäumte Platte mindestens 5 mm, vorzugsweise 10 mm dick ist.

Weiters wird die erfindungsgemäße Verbundmatte vorzugsweise als Rollenware mit einer Breite zwischen 1 m und 1,5 m produziert und ist in der Länge zuschneidbar.

Nachstehend wird nun die Erfindung anhand der Figuren der beiliegenden Zeichnung näher beschrieben, die vergrößerte Querschnitte durch zwei Ausführungen der Verbundmatte zeigen.

Eine zur Trittschalldämmung und als Montagehilfe für Rohre einer Flächenheizung auf einer Rohdecke oder einem anderen Untergrund verlegbare Verbundmatte weist eine Platte 1 aus geschäumtem Polyethylen mit einer Mindestdicke von 5 mm, vorzugsweise von 10 mm, auf. Die Platte 1 ist an ihrer Unterseite mit einer insbesondere vollflächigen Klebeschicht 4 zur Verbindung mit einem nicht gezeigten Untergrund versehen, beispielsweise mit einer Rohdecke eines Gebäudes. Die Klebeschicht 4 ist von einer entfernbaren Schutzfolie 5 abgedeckt. Die Verbundmatte wird insbesondere als Rollenware in einer Breite von einem oder eineinhalb Meter produziert und kann in die benötigte Länge und Größe geschnitten werden.

An der Oberseite der Platte 1 ist ein Netz 2 vorgesehen, über dem eine gegebenenfalls mit einer Schmelzklebeschicht versehene Deckfolie 3, ebenfalls aus Polyethylen, angeordnet ist. Die Deckfolie 3 ist mit der Platte 1 unter Einschluss des Netzes 2 verklebt, oder, wenn sie ohne Schmelzklebeschicht produziert ist, verschweißt, und schützt das Netz 2 zusätzlich, bis der darüber aufzubringende Estrich erhärtet ist.

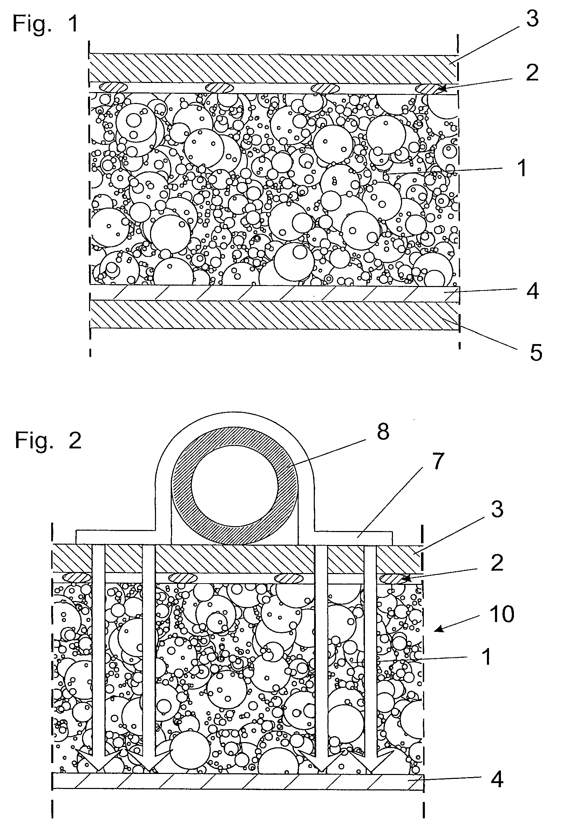

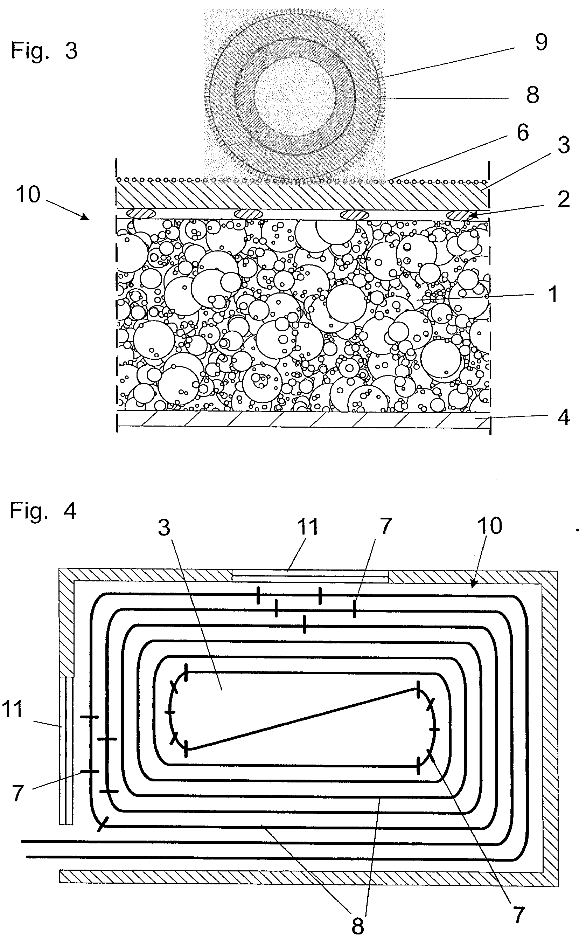

In der Ausführung der Fig. 2 ist die Deckfolie 3 als Klettfolie ausgebildet und trägt dann entweder Häkchen oder Schlaufen 6 an der Oberfläche, und entsprechend ausgestattete Rohre 8 einer auf der Verbundmatte aufzulegenden Flächenheizung können in beliebiger Lage festgelegt werden.

Verankerungselemente 7, die sich am Netz 2 verhaken, können in die Platte 1 eingedrückt werden, sodass sich die Rohre 8 auch dann nicht lockern oder lösen können, wenn eine Schmelzverklebung allein nicht ausreichend ist, beispielsweise in Bereichen mit starker Sonneneinstrahlung, die den Schmelzkleber erweicht.

## Patentansprüche

1. Verbundmatte zum Verhaken von Rohrbefestigungsorganen für eine Flächen-heizung mit einer Platte (1) aus einem geschäumten Kunststoff und mit einem an einer Seite der Platte (1) befestigten Netz (2), **dadurch gekennzeichnet, dass** auf dem Netz (2) eine Deckfolie (3) angeordnet ist.

2. Verbundmatte nach Anspruch 1, **dadurch gekennzeichnet, dass** die Deckfolie (3) eine Klettfolie ist.

3. Verbundmatte nach Anspruch 1 oder 2, **dadurch gekennzeichnet, dass** die Deckfolie (3) aus einem Polyethylen besteht.

4. Verbundmatte nach einem der Ansprüche 1 bis 3, **dadurch gekennzeichnet, dass** die Platte (1) und die Deckfolie (3) miteinander verschweißt sind.

5. Verbundmatte nach einem der Ansprüche 1 bis 3, **dadurch gekennzeichnet, dass** die Platte (1) und die Deckfolie (3) miteinander verklebt sind.

6. Verbundmatte nach Anspruch 5, **dadurch gekennzeichnet, dass** die Deckfolie (3) mit einer Schmelzklebeschicht (6) versehen ist.

7. Verbundmatte nach einem der Ansprüche 1 bis 6, **dadurch gekennzeichnet, dass** die Platte (1) an der von der Deckfolie (3) abgewandten Seite eine vollflächige Klebeschicht (4) zur Verbindung mit einem Untergrund aufweist.

8. Verbundmatte nach Anspruch 7, **dadurch gekennzeichnet, dass** die Klebeschicht (4) mit einer entfernbaren Schutzfolie (5) versehen ist.

9. Verbundmatte nach einem der Ansprüche 1 bis 8, **dadurch gekennzeichnet, dass** die Platte (1) eine Dicke von mindestens 5 mm aufweist.

10. Verbundmatte nach einem der Ansprüche 1 bis 9, **dadurch gekennzeichnet, dass** die Platte (1) eine Dicke von 10 mm aufweist.

11. Verbundmatte nach einem der Ansprüche 1 bis 10, **dadurch gekennzeichnet, dass** die Platte (1) eine Breite zwischen 1 m und 1,5 m aufweist.

12. Verbundmatte nach einem der Ansprüche 1 bis 11, **dadurch gekennzeichnet, dass** die Platte (1) aus einem Polyethylen geschäumt ist.

13. Verbundmatte nach einem der Ansprüche 1 bis 12, **dadurch gekennzeichnet, dass** sie als Rollenware produziert wird und in der Länge zuschneidbar ist.

14. Rohrbefestigung zum Befestigen eines Rohres (8) auf einer Verbundmatte nach einem der Ansprüche 1 bis 13 mittels mindestens eines Verankerungselementes (7), das das Rohr (8) zumindest teilweise umgreift und durch das Netz (2) hindurch in der Platte (1) und/oder am Netz (2) verankert ist.
